# FASCICULE DE BREVET EUROPEEN

(11) **EP 3 577 334 B1**
(45) Date de publication et mention de la délivrance du brevet: **04.11.2020**
(21) Numéro de dépôt: 18705706.2
(22) Date de dépôt: 01.02.2018
(51) Int. Cl.: F02K 9/84, F16D 3/40

(54) **CROIX DE CARDAN AMELIORÉE**
VERBESSERTES ZAPFENKREUZ
IMPROVED UNIVERSAL JOINT

(30) Priorité: 03.02.2017 FR 1750924
(43) Date de publication de la demande: 11.12.2019
(73) Titulaire: ArianeGroup SAS, 75015 Paris (FR)
(72) Inventeur: PYRE, Alain, 27950 Saint Just (FR); LUQUET, Nicolas, 27200 Vernon (FR); MATHIAS, Clain, 78700 Conflans Sainte Honorine (FR)
(74) Mandataire: Cabinet Beau de Loménie
(86) Numéro de dépôt international: PCT/FR2018/050236
(87) Numéro de publication internationale: WO 2018/142075

(56) Documents cités:
- DE-A1-102013 107 679
- GB-A- 1 231 499

## Description

### DOMAINE DE L'INVENTION

La présente invention concerne le domaine des articulations mécaniques utilisées dans des moteurs, notamment des moteurs aéronautiques ou des moteurs fusée, et plus spécifiquement les croix de cardan utilisées dans ces moteurs.

### ETAT DE LA TECHNIQUE ANTERIEURE

Au sein d'un engin spatial, les moteurs fusée sont généralement montés sur un cardan comprenant une croix de cardan. Ces croix de cardans sont soumises à des contraintes mécaniques importantes. Les croix de cardan connues sont des pièces massives en métal forgé ou moulé monobloc, afin de résister à ces contraintes. Toutefois, les procédés permettant de fabriquer ces pièces sont souvent complexes, et comportent le risque de présence de défauts sur les pièces finales. Par ailleurs, ces croix de cardan connues sont en général des pièces lourdes et coûteuses. DE 10 2013 107 679 A1 décrit un exemple d'une telle croix de cardan. Il existe donc un besoin en ce sens.

### PRESENTATION DE L'INVENTION

Un mode de réalisation concerne une croix de cardan telle que définie dans la revendication 1, comprenant un corps comprenant quatre équerres, chaque équerre possédant deux bras perpendiculaires l'un à l'autre, le bras d'une équerre étant assemblé au bras d'une équerre adjacente de manière à former une croix comportant quatre branches. Le corps comprend au moins quatre raidisseurs, un raidisseur étant monté entre les deux bras de chaque équerre.

On comprend que la croix présente deux directions axiales perpendiculaires s'étendant chacune parallèlement à deux branches de la croix. Un centre de la croix est formé par l'intersection des deux directions axiales de la croix. En outre, les directions axiales s'étendent dans un même plan, ce plan étant désigné par la suite par « plan de la croix ». La croix de cardan est soumise, lorsqu'elle est montée au sein d'un cardan portant un moteur fusée, à des contraintes de flexion et de torsion. Les contraintes de torsion sont les contraintes dirigées autour de la direction perpendiculaire au plan de la croix et passant par le centre de la croix. Les contraintes de torsion tendent généralement à déformer les branches dans le plan de la croix. Les contraintes de flexion sont des contraintes dirigées transversalement au plan de la croix. Les contraintes de flexion tendent à déformer les branches perpendiculairement au plan de la croix. Les contraintes de flexion peuvent notamment provoquer un phénomène de vrillage des branches entre elles, où deux branches perpendiculaires se déforment dans une direction opposée perpendiculairement au plan de la croix.

On comprend que dans chaque équerre, les deux bras sont perpendiculaires l'un à l'autre à +/- 2° maximum, cette variation étant liée aux tolérances de fabrication. Chacune des quatre branches de la croix comporte donc deux bras appartenant à deux équerres adjacentes. Autrement dit, chaque équerre présente un bras dans une branche de la croix. Chaque équerre comporte donc deux bras appartenant à deux branches perpendiculaires de la croix. La structure en croix du corps de la croix de cardan est ainsi obtenue par simple assemblage de quatre équerres, simplifiant ainsi la fabrication, grâce à quoi le risque de présence de défauts sur les pièces finales est réduit. De plus, ce type de structure permet d'obtenir des croix de cardan plus légère que des croix de cardan de l'état de la technique.

Chaque équerre est ainsi équipée d'au moins un raidisseur. La présence de ces raidisseurs permet ainsi d'améliorer la raideur de la croix et réduit les déformations résultant des contraintes de torsion, en limitant notamment les déplacements des deux bras de chaque équerre l'un par rapport à l'autre dans le plan de la croix.

Dans certains modes de réalisation, chaque raidisseur est fixé à chaque bras d'une équerre à l'aide d'au moins deux boulons.

Par « boulon », on comprend un ensemble comportant une vis et un écrou. Les au moins deux boulons sont espacés l'un de l'autre le long de chaque bras suivant la direction axiale. Ces boulons permettent de maintenir en position fixe chaque raidisseur par rapport à l'équerre sur laquelle il est monté. L'espacement de deux boulons le long du bras permet également d'améliorer la résistance en flexion de la croix, et de limiter les phénomènes de vrillage provoqués par ces contraintes de flexion. Ce système de fixation utilisant des boulons permet en outre de simplifier le processus d'assemblage des différents éléments constituant la croix de cardan, réduisant ainsi le risque de présence de défauts sur les pièces finales. De plus, ce système de fixation permet d'obtenir des croix de cardan plus légère que des croix de cardan de l'état de la technique.

Dans certains modes de réalisation, chaque raidisseur et chaque bras d'une équerre comportent au moins deux trous traversant permettant respectivement le passage des au moins deux boulons.

Dans certains modes de réalisation, lesdits boulons sont configurés pour assembler ensemble deux équerres adjacentes.

En d'autres termes, chaque boulon permet non seulement d'assembler un raidisseur à un bras d'une équerre, mais permet également d'assembler le bras de ladite équerre au bras d'une équerre adjacente. Ce système d'assemblage permet de minimiser le nombre de boulons nécessaires pour assurer la cohésion et le maintien entre eux des éléments constituant la croix. Le fait de minimiser le nombre de boulons permet de minimiser la masse totale de la croix de cardan, et de réduire le risque de présence de défauts sur les pièces finales.

Dans certains modes de réalisation, la distance entre deux boulons d'un même bras est supérieure ou égale à 30% de la longueur du bras.

On comprend que la longueur du bras et la distance entre deux boulons sont considérées suivant une direction axiale. Par ailleurs, lesdits deux boulons ne sont pas nécessairement adjacents, de sorte que d'autres boulons peuvent être intercalés entre ces deux boulons. Ainsi, cette distance supérieure ou égale à 30% de la longueur du bras désigne la distance entre les deux boulons les plus éloignés d'un même bras, suivant la direction axiale. Le fait d'espacer suffisamment les boulons présente l'avantage d'améliorer la raideur de l'assemblage entre les équerres et les raidisseurs, et ainsi d'améliorer la résistance en flexion de la croix, limitant les phénomènes de vrillage provoqués par ces contraintes de flexion. Cela offre en outre une meilleure répartition des efforts de torsion.

Dans certains modes de réalisation, la croix de cardan comporte quatre arbres, chaque branche de la croix portant un arbre monté entre deux bras de deux équerres adjacentes.

On comprend que, lorsqu'un arbre est monté entre deux bras de deux équerres adjacentes, l'axe dudit arbre s'étend selon une direction axiale. En d'autres termes, l'axe de chaque arbre s'étend selon une direction axiale de la croix.

Les arbres peuvent être par exemple cylindriques de section circulaire. Chaque arbre peut par exemple être pris en sandwich entre les deux bras de deux équerres adjacentes. Par conséquent, le simple assemblage d'une équerre à une autre permet de porter et de maintenir un arbre, simplifiant ainsi le processus d'assemblage de la croix de cardan, et limitant la masse de celle-ci.

Dans certains modes de réalisation, les bras de chaque équerre présentent une partie configurée pour recevoir un arbre en partie.

Par « en partie », on comprend que, lorsqu'un un arbre est monté entre deux bras de deux équerres adjacentes, une partie seulement dudit arbre coopère avec ces deux bras. La partie configurée pour recevoir un arbre en partie présente l'avantage d'améliorer le maintien dudit arbre lorsque ce dernier est monté entre deux bras de deux équerres adjacentes, par exemple en étant pris en sandwich entre ces deux bras, et en coopérant avec ces derniers par complémentarité de formes. Ceci permet de minimiser la masse totale de la croix de cardan, et de réduire le risque de présence de défauts sur les pièces finales.

Dans certains modes de réalisation, le corps comprend huit raidisseurs, deux raidisseurs étant fixés à chaque équerre de part et d'autre de la partie configurée pour recevoir un arbre en partie par rapport à une direction axiale de l'arbre.

En d'autres termes, deux raidisseurs sont fixés à chaque équerre de part et d'autre du plan de la croix. Pour chaque équerre, un premier raidisseur est fixé d'un côté de la partie configurée pour recevoir un arbre en partie à l'aide d'au moins un boulon, et un deuxième raidisseur est fixé de l'autre côté de ladite partie par rapport à la direction axiale, à l'aide d'au moins un boulon. La présence de deux raidisseurs fixés ainsi à chaque équerre permet de limiter encore plus les déformations dues aux contraintes de flexion. Ceci permet en outre d'accroître encore la résistance aux contraintes de torsion. La présence des deux raidisseurs permet également une meilleure homogénéité et répartition des efforts. Par ailleurs, le fait que les deux raidisseurs soient fixés de part et d'autre de la partie configurée pour recevoir un arbre en partie permet de libérer l'espace nécessaire à l'insertion d'un arbre entre les bras de deux équerres adjacentes. La structure de la croix de cardan est ainsi optimisée, ce qui permet de limiter sa masse et de réduire le risque de présence de défauts sur les pièces finales.

Dans certains modes de réalisation, chaque équerre est fabriquée en tôle métallique pliée.

La mise en forme de la tôle métallique, afin d'obtenir une équerre, peut être effectuée par exemple par pliage et ou emboutissage. L'utilisation d'une tôle métallique pour réaliser une équerre présente l'avantage d'être peu couteuse, simple à mettre en œuvre avec un risque réduit d'obtenir une pièce présentant des défauts, tandis que les contrôles des pièces sont plus faciles à réaliser sur une tôle que sur un bloc forgé monobloc.

Le présent exposé concerne également un moteur de fusée comportant au moins une croix de cardan selon l'une quelconque des revendications précédentes.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue en perspective d'une croix de cardan ;
- la figure 2 représente une vue de la croix de cardan suivant une direction perpendiculaire au plan de la croix, quatre raidisseurs seulement étant représentés ;
- la figure 3 représente une vue de la croix de cardan suivant une direction axiale d'un arbre ;
- la figure 4 représente une vue en perspective d'une équerre ;
- la figure 5 représente une vue en perspective d'un raidisseur.

### DESCRIPTION DETAILLEE D'EXEMPLES DE REALISATION

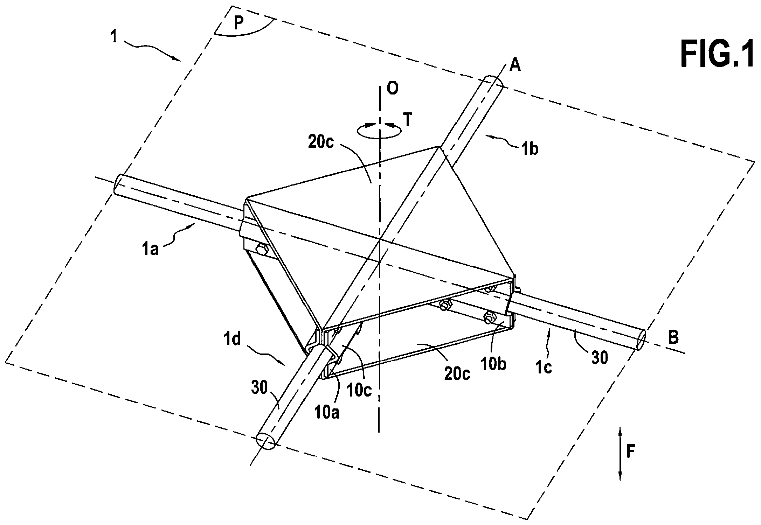

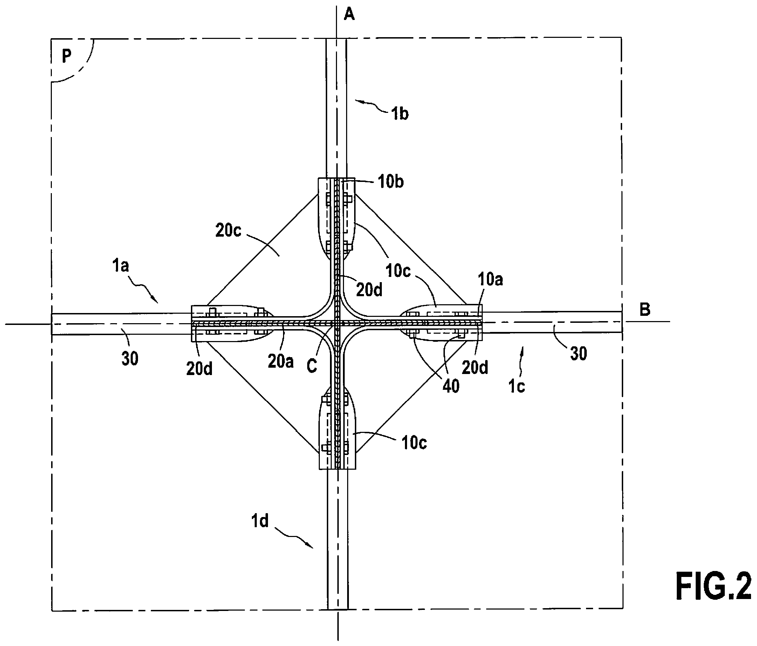

Une croix de cardan 1 va être décrite en référence aux figures 1 à 5. La croix de cardan 1 présente quatre branches 1a, 1b, 1c et 1d, chaque branche étant perpendiculaire à la branche adjacente. La croix de cardan 1 présente deux directions axiales A et B s'étendant chacune parallèlement à deux branches de la croix. Un centre C est formé par l'intersection des deux directions axiales A et B de la croix. En outre, les directions axiales A et B s'étendent dans un même plan P, ce plan étant désigné par la suite par « plan de la croix » P. Les contraintes de torsion T sont les contraintes dirigées autour de la direction O perpendiculaire au plan P et passant par le centre C de la croix. Les contraintes de flexion F sont les contraintes dirigées transversalement au plan P de la croix.

La croix de cardan comporte quatre équerres 10. Chaque équerre 10 comporte un premier bras 10a relié à un deuxième bras 10b. Les première et deuxième bras 10a et 10b forment entre eux un angle droit, et chaque bras 10a, 10b de chaque équerre 10 est fixé à un bras 10a, 10b d'une équerre adjacente, de manière à former les quatre branches 1a, 1b, 1c et 1d de la croix de cardan 1. Les première et deuxième bras 10a et 10b comportent également chacun une partie configurée pour recevoir un arbre en partie. La partie configurée pour recevoir un arbre en partie présente une partie concave 10c. La partie concave 10c de chaque bras est ouverte à l'opposé de l'autre bras de l'équerre. Par ailleurs, la partie concave 10c s'étend sur au moins 40 à 50% de la longueur de chaque bras, de préférence au moins 70%, de préférence encore au moins 90%.

Chaque équerre 10 comporte également une pluralité d'orifices 10d. Dans cet exemple, les premier et deuxième bras 10a et 10b comportent chacun quatre orifices 10d. Sur chaque bras, deux paires d'orifices sont espacés l'un de l'autre suivant la direction axiale. Chaque paire d'orifices comporte un orifice disposé d'un côté de la partie concave 10c, et un orifice disposé de l'autre côté de la partie concave 10c, par rapport au plan P de la croix.

Chaque équerre 10 est obtenue à partir d'une tôle métallique mise en forme par emboutissage et pliage. De telles tôles ont par exemple une épaisseur comprise entre 5 et 8 mm. Une tôle de 6 mm d'épaisseur correspond par exemple à une croix présentant une longueur de 162 mm (entre les extrémités de deux branches opposées). En outre, elles peuvent être réalisées à base de nickel (c'est-à-dire comporter plus de 50% en masse de nickel) ou d'acier.

Un arbre 30 est disposé entre les bras de deux équerres 10 adjacentes. Dans cet exemple, les arbres 30 sont des cylindres de section circulaire, de sorte que chaque arbre 30 est logé en partie dans la partie concave 10c des bras desdites équerres 10 adjacentes. Une extrémité de chacun des quatre arbres 30 est maintenue entre les bras de deux équerres adjacentes. L'autre extrémité de chacun des quatre arbres 30 s'étend au-delà des bras entre lesquels il se trouve. Ainsi, lorsque les quatre équerres 10 et les quatre arbres 30 sont assemblés, deux arbres 30 sont dirigés suivant la direction A, et deux arbres 30 sont dirigés suivant la direction B. Dans cet exemple, les extrémités des arbres 30 n'étant pas maintenues entre les bras de deux équerres adjacentes servent de liaisons pivots entre la croix de cardan et les fourchettes du cardan (non représentées), lorsque ladite croix est montée dans un moteur.

La croix de cardan 1 comporte également huit raidisseurs 20, deux raidisseurs 20 étant montés entre les deux bras 10a et 10b de chaque équerre 10, de sorte que : un premier raidisseur est fixé à l'équerre 10, d'un côté de la partie concave 10c de ladite équerre 10, et un deuxième raidisseur est fixé à ladite équerre, de l'autre côté de ladite partie concave 10c par rapport au plan P (voir figure 1). La croix de cardan comporte ainsi un premier ensemble de quatre raidisseurs 20, d'un côté des parties concaves 10c, et un deuxième ensemble de quatre raidisseurs 20, de l'autre côté des parties concaves 10c.

Chaque raidisseur 20, comporte un corps 20c, une première bordure latérale 20a et une deuxième bordure latérale 20b. Le raidisseur est formé par exemple à partir d'une plaque métallique dont des parties, formant les première et deuxième bordures latérales 20a et 20b, sont pliées par rapport au corps 20c. Par conséquent, les première et deuxième bordures latérales 20a et 20b s'étendent perpendiculairement par rapport au corps 20c. En outre les bordures latérales 20a et 20b comportent chacune une échancrure 20d de sorte que, dans une vue perpendiculaire aux bordures latérales 20a ou 20b, la hauteur des première et deuxième bordures latérales 20a et 20b est plus faible dans l'échancrure 20d. Les première et deuxième bordures latérales 20a et 20b, peuvent également comporter une pluralité d'orifices 20e. Dans cet exemple, les première et deuxième bordures latérales 20a et 20b comportent chacune deux orifices 20e de sorte que, pour les deux ensembles de quatre raidisseurs, chaque bordure latérale 20a, 20b de chaque raidisseur 20 est fixé à une bordure latérale d'un raidisseur adjacent.

Les raidisseurs 20 sont fixés aux équerres 10 à l'aide de boulons 40. Chaque boulon 40 permet d'assembler et de fixer ensemble deux équerres 10 et deux raidisseurs 20 adjacents, en passant par les orifices 10d et 20e coïncidents. Dans l'exemple présent, lorsque les différents éléments de la croix de cardan sont assemblés, les premières bordures latérales 20a respectives de deux raidisseurs adjacents sont en contact l'une avec l'autre. Ainsi, l'assemblage et la fixation par un boulon 40 des premiers bras 10a respectifs de deux équerres adjacentes permet également la fixation desdites premières bordures latérales 20a entre elles, par ce même boulon 40.

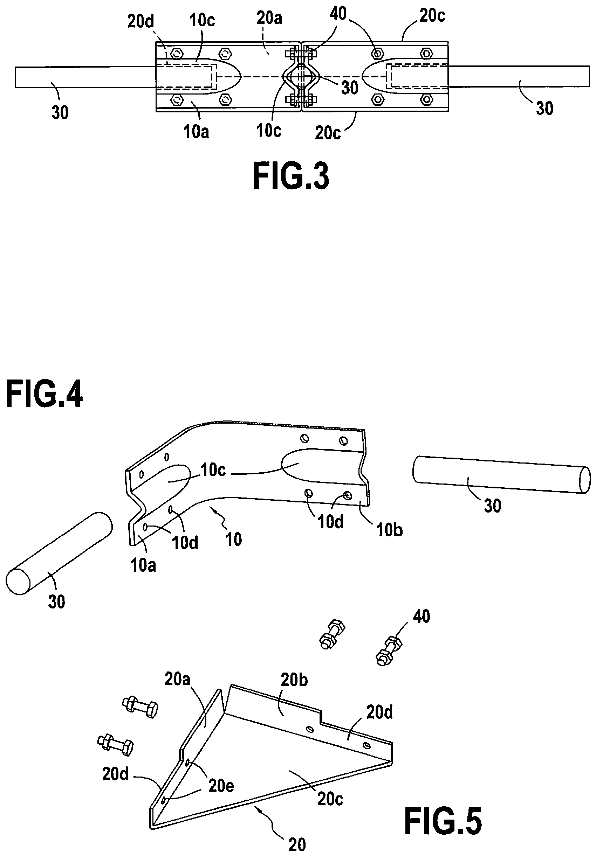

Par ailleurs, la présence des parties échancrées 20d permet de libérer l'espace nécessaire à l'insertion de l'arbre 30 entre les bras des deux équerres adjacentes auxquelles sont fixés deux raidisseurs 20 de part et d'autre des parties concaves 10c (voir traits en pointillés sur la figure 3). Ainsi, le serrage des boulons 40 permet également le maintien (par serrage) de l'arbre 30, pris en sandwich entre les bras de deux équerres adjacentes, en étant logé dans les parties concaves 10c desdits bras.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Croix de cardan (1) comprenant un corps comprenant quatre équerres (10), chaque équerre (10) possédant deux bras (10a, 10b) perpendiculaires l'un à l'autre, le bras (10a) d'une équerre (10) étant assemblé au bras (10a) d'une équerre (10) adjacente de manière à former une croix comportant quatre branches (1a, 1b, 1c, 1d), le corps comprenant au moins quatre raidisseurs (20), un raidisseur (20) étant monté entre les deux bras (10a, 10b) de chaque équerre (10).

2. Croix de cardan (1) selon la revendication 1, dans laquelle chaque raidisseur (20) est fixé à chaque bras (10a, 10b) d'une équerre (10) à l'aide d'au moins deux boulons (40).

3. Croix de cardan (1) selon la revendication 2, dans laquelle deux équerres (10) adjacentes sont assemblées ensemble par lesdits boulons (40).

4. Croix de cardan (1) selon la revendication 2 ou 3, dans laquelle la distance entre deux boulons (40) d'un même bras (10a) est supérieure ou égale à 30% de la longueur du bras (10a).

5. Croix de cardan (1) selon l'une quelconque des revendications 1 à 4, comportant quatre arbres (30), chaque branche de la croix portant un arbre (30) monté entre deux bras (10a) de deux équerres (10) adjacentes.

6. Croix de cardan (1) selon la revendication 5, dans laquelle les bras (10a, 10b) de chaque équerre (10) présentent une partie (10c) configurée pour recevoir un arbre (30) en partie.

7. Croix de cardan (1) selon la revendication 6, dans laquelle le corps comprend huit raidisseurs (20), deux raidisseurs (20) étant fixés à chaque équerre (10) de part et d'autre de la partie (10c) configurée pour recevoir un arbre (30) en partie par rapport à une direction axiale de l'arbre (30).

8. Croix de cardan (1) selon l'une quelconque des revendications 1 à 7, dans laquelle chaque équerre (10) est fabriquée en tôle métallique pliée.

9. Moteur de fusée comportant au moins une croix de cardan (1) selon l'une quelconque des revendications précédentes.

## Patentansprüche

1. Zapfenkreuz (1), das einen Körper umfasst, der vier Eckwinkel (10) umfasst, wobei jeder Eckwinkel (10) zwei Arme (10a, 10b) besitzt, die senkrecht zueinander sind, wobei der Arm (10a) eines Eckwinkels (10) mit dem Arm (10a) eines benachbarten Eckwinkels (10) verbunden ist, um ein Kreuz zu bilden, das vier Zweige (1a, 1b, 1c, 1d) beinhaltet, wobei der Körper mindestens vier Versteifungen (20) umfasst, wobei eine Versteifung (20) zwischen den zwei Armen (10a, 10b) jedes Eckwinkels (10) angebracht ist.

2. Zapfenkreuz (1) nach Anspruch 1, wobei jede Versteifung (20) mit Hilfe von mindestens zwei Bolzen (40) an jedem Arm (10a, 10b) eines Eckwinkels (10) befestigt ist.

3. Zapfenkreuz (1) nach Anspruch 2, wobei zwei benachbarte Eckwinkel (10) durch die Bolzen (40) miteinander verbunden sind.

4. Zapfenkreuz (1) nach Anspruch 2 oder 3, wobei der Abstand zwischen zwei Bolzen (40) eines Arms (10a) mehr als oder gleich 30 % der Länge des Arms (10a) beträgt.

5. Zapfenkreuz (1) nach einem der Ansprüche 1 bis 4, das vier Wellen (30) beinhaltet, wobei jeder Zweig des Kreuzes eine Welle (30) trägt, die zwischen zwei Armen (10a) von zwei benachbarten Eckwinkeln (10) angebracht ist.

6. Zapfenkreuz (1) nach Anspruch 5, wobei die Arme (10a, 10b) jedes Eckwinkels (10) ein Teil (10c) aufweisen, das dazu ausgestaltet ist, teilweise eine Welle (30) aufzunehmen.

7. Zapfenkreuz (1) nach Anspruch 6, wobei der Körper acht Versteifungen (20) umfasst, wobei zwei Versteifungen (20) an jedem Eckwinkel (10) auf beiden Seiten des Teils (10c), das dazu ausgestaltet ist, teilweise eine Welle (30) aufzunehmen, in Bezug auf eine axiale Richtung der Welle (30) befestigt sind.

8. Zapfenkreuz (1) nach einem der Ansprüche 1 bis 7, wobei jeder Eckwinkel (10) aus einem gebogenen Metallblech hergestellt ist.

9. Raketentriebwerk, das mindestens ein Zapfenkreuz (1) nach einem der vorhergehenden Ansprüche beinhaltet.

## Claims

1. A cardan joint spider (1) comprising a body having four right-angled brackets (10), each bracket (10) presenting two mutually perpendicular arms (10a, 10b), the arm (10a) of one bracket (10) being assembled to the arm (10a) of an adjacent bracket (10) so as to form a cross-shaped spider having four branches (1a, 1b, 1c, 1d), the body including at least four stiffeners (20), a stiffener (20) being mounted between the two arms (10a, 10b) of each bracket (10).

2. A spider (1) according to claim 1, wherein each stiffener (20) is fastened to each arm (10a, 10b) of a bracket (10) by means of at least two bolts (40).

3. A spider (1) according to claim 2, wherein two adjacent brackets (10) are assembled together by said bolts (40).

4. A spider (1) according to claim 2 or claim 3, wherein the distance between two bolts (40) through a given arm (10a) is greater than or equal to 30% of the length of the arm (10a) .

5. A spider (1) according to any one of claims 1 to 4, including four shafts (30), each branch of the spider carrying a respective shaft (30) mounted between two arms (10a) of two adjacent brackets (10).

6. A spider (1) according to claim 5, wherein each arm (10a, 10b) of each bracket (10) includes a portion (10c) configured to receive a shaft in part (30).

7. A spider (1) according to claim 6, wherein the body has eight stiffeners (20), with two stiffeners (20) being fastened to each bracket (10) on respective sides, with respect to the axial direction of the shaft (30), of the portion (10c) configured to receive a shaft in part (30).

8. A spider (1) according to any one of claims 1 to 7, wherein each bracket (10) is made of folded sheet metal.

9. A rocket engine including at least one cardan joint spider (1) according to any preceding claim.
